# NEUE EUROPÄISCHE PATENTSCHRIFT

(11) **EP 2 099 667 B2**
(45) Veröffentlichungstag und Bekanntmachung des Hinweises auf die Entscheidung über den Einspruch: **29.06.2016**
(45) Hinweis auf die Patenterteilung: 09.01.2013
(21) Anmeldenummer: 07847323.8
(22) Anmeldetag: 26.11.2007
(51) Int. Cl.: B60W 50/029, B60W 50/02

(54) **VERFAHREN ZUM SICHERSTELLEN ODER AUFRECHTERHALTEN DER FUNKTION EINES KOMPLEXEN SICHERHEITSKRITISCHEN GESAMTSYSTEMS**
METHOD FOR ENSURING OR MAINTAINING THE FUNCTION OF A COMPLEX COMPLETE SAFETY-CRITICAL SYSTEM
PROCEDE POUR GARANTIR OU MAINTENIR LA FONCTION D'UN SYSTEME GLOBAL COMPLEXE CRITIQUE POUR LA SECURITE

(30) Priorität: 30.11.2006 DE 102006056668
(43) Veröffentlichungstag der Anmeldung: 16.09.2009
(73) Patentinhaber: Continental Teves AG & Co. OHG, 60488 Frankfurt (DE)
(72) Erfinder: KASCHA, Reinhold, 63674 Altenstadt (DE)
(86) Internationale Anmeldenummer: PCT/EP2007/062782
(87) Internationale Veröffentlichungsnummer: WO 2008/065059

(56) Entgegenhaltungen:
- EP-A2- 0 999 117
- EP-A2- 1 227 007
- EP-B1- 0 976 012
- WO-A-2004/005096
- WO-A2-2004/005090
- DE-A1- 4 118 692
- DE-A1- 4 414 980
- DE-A1- 4 439 060
- DE-A1- 10 101 827
- DE-A1- 10 113 917
- DE-A1- 10 154 763
- DE-A1- 10 223 732
- DE-A1- 19 607 284
- DE-A1- 19 607 429
- DE-A1- 19 631 309
- DE-A1- 19 733 379
- DE-A1- 19 753 907
- DE-A1-102004 058 996
- DE-A1-102005 001 524
- DE-A1-102005 055 173
- DE-A1-102005 057 066
- US-A- 5 236 254
- US-A- 5 957 985
- US-A1- 2006 075 808

## Beschreibung

Die Erfindung betrifft ein Verfahren gemäß Anspruch 1, dessen Verwendung, sowie ein Computerprogrammprodukt.

Aus der WO 2004/005096 A1 ist ein Verfahren zum Sicherstellen oder Aufrechterhalten der Funktion eines komplexen sicherheitskritischen Gesamtsystems, wie eines Kraftfahrzeugregelungssystems, z.B. eines elektrischen, elektrohydraulischen oder elektromechanischen Bremsensystems (Brake-by-Wire), eines elektronischen Lenkungssystems (Steering-by-Wire) etc., beim Auftreten von Fehlern oder Fehlfunktionen bekannt. Ein artverwandtes Fahrzeugnetzwerksystem, welches eine dynamische Funktionsverteilung von Systemkomponenten auf Basis eines Verfügbarkeitssignals, das ein Funktionalitätsvermögen und einen Zustand der jeweiligen Komponente mitteilt, ist in der DE 10 2005 055 173 A1 beschrieben. Der Zustand einer Komponente kann dabei beispielsweise ein vorübergehender Störungszustand oder ein dauerhafter Fehlerzustand sein. Eine Unterscheidung zwischen solchen temporären und permanenten Fehlerzuständen erfolgt ebenfalls gemäß den in den Schriften US 2006/0075808 A1, DE 196 07 284 A1, EP 0 999 117 A2 beschriebenen Verfahren bzw. Systemen.

Sicherheitsrelevante Systeme mit vielen unterschiedlichen, teilweise aufeinander aufbauenden Teilsystemen erfordern Maßnahmen, die auch bei Funktionsfehlern und beim Ausfall einzelner Systemkomponenten (z.B. ESP, ABS, TCS usw.) eine definierte Funktionsweise sicherstellen. Ohne ein Sicherheitskonzept führt schon ein relativ unbedeutender Fehler zu einem Totalausfall eines Teilsystems oder sogar der gesamten Regelung.

Eine einfache Fehlerquellenanalyse durch Abarbeiten bestimmter, gespeicherter Fehlerbilder funktioniert nur in einem übersichtlichen System mit einer geringen Anzahl an Einzelfehlern. In einem komplexen Gesamtsystem existieren derart viele Fehlerkombinationen, dass nach der Methode der Fehlerbildbehandlung nur die wahrscheinlichsten Fehlerbilder berücksichtigt werden können. In allen anderen Fällen wird das Gesamtsystem sicherheitshalber komplett stillgelegt. Dies ist jedoch zum Beispiel dann nicht hinnehmbar, wenn es sich bei dem Gesamtsystem um ein Steuergerät für eine elektrische Lenkung (ohne mechanische Rückfallebene) handelt.

Das aus der WO 2004/005096 A1 bekannte Verfahren, welches sich auf ein integriertes Gesamtsystem (Das Gesamtsystem führt nur eine Hauptaufgabe aus, also z.B. die Steuerung/Regelung ein Bremssystem) bezieht, nimmtdahereine Fehleraufteilungfürjede einzelne Systemkomponente (z.B. Drucksensor, Raddrehzahlsensor am Rad vorne links usw.) vor. Außerdem werden für jede Systemkomponente einzelne Notlaufmodi definiert werden. Dann wird ein Auswahlsystem definiert, mitdem festgestelltwird, welche Betriebsmodi in Abhängigkeit von dem erkannen Einzelfehler für alle Systemkomponenten zulässig sind.

Die durch das obige Verfahren durchgeführte Erstfehleranalyse liefert folgende Ergebnisse:
- Die Unterteilung des Systems in voneinander unabhängige Systemkomponten;
- die Definition der Betriebsmodi fürjede einzelne Systemkomponente (neben "verfügbar/nicht verfügbar" können diverse Notlaufmodi definiert werden);
- es wird ein Auswahlsystem, z.B. in Form einer Entscheidungsmatrix, gebildet, mit dem festgestellt wird, welche Betriebsmodi in Abhängigkeit von dem erkannten "Einzelfehler" für alle Systemkomponenten zulässig sind.

Gemäß dem bekannten Verfahern werden permanent (in jeder Loop) sämtliche Fehlerquellen analysiert. Bei Auftreten eines Fehlers werden den betroffenen Systemkomponenten alle korrelierten Betriebsmodi aberkannt. Somit wird eine systemweite Komponentendegradation erreicht. Aus den nach der Fehleranalyse für die Systemkomponenten noch verfügbaren Betriebsmodi werden schließlich nach Vorgaben eines Modus-Auswahlsystems diejenigen Betriebsmodi ausgewählt und zum Einsatz gebracht, die unter den gegebenen Bedingungen das optimale Verhalten des Gesamtsystems garantieren.

Das obige Verfahren löst zwar prinzipiell die primäre Aufgabe der Mehrfachfehlertauglichkeit eines Fehlerbehandlungsverfahrens, jedoch wertet das Verfahren nachteilhafterweise ausschließlich Systemfehler und -störungen aus. Dabei ist es unerheblich, ob die Komponentenverfügbarkeit aufgrund eines Systemfehlers/einer Systemstörung oder aufgrund von Konfigurationsmaßnahmen bzw. besonderer Systemzustände (Diagnose u. ä.) beeinflusst wird.

Außerdem setzt das bekannte Fehlerbehandlungsverfahren voraus, dassdieses im Gesamtfahrzeugregelungs- und/oder - steuerungsystems eine zentralisierte Stellung einnimmt und dass in dessen Wirkungsbereich sämtliche Systemkomponenten eingeschlossen bzw. erreichbar sind. Aufgrund dieses Erfodernisses kann das Verfahren nicht in solchen Gesamtregelungs- und/oder -steuerungssystemen zum Einsatz kommen, die über das Kraftfahrzeug verteilt sind.

Ein weiterer Nachteil des bekannten Systems besteht darin, dass viele Eingangssignale in dem oben erwähnten Betriebsmodus-Berechnungssystem (wie finale Fehler, Online-Konfigurationssignale etc.) einen quasistationären Charaktier aufweisen, d.h. sie ändern während eines Betriebszyklus höchstens einmal ihren Zustand. Die in jedem Berechnungsschritt aufs Neue vorgenommene Auswertung dieser Signale ist sehr rechenintensiv.

Schließlich istdas bekannte Verfahren nochdahingehend Nachteilhaft, dass in jedem Berechnungsschritt die zum Einsatz zu bringenden Betriebsmodi ermittelt werden müssen, selbst dann, wenn die noch verfügbaren Betriebsmodi der Systemkomponenten keine Änderung erfahren haben. Nicht zuletzt wegen des hohen Rechenaufwands erscheint es nicht sinnvoll, die Auswahl der zum Einsatz zu bringenden Betriebsmodi auf jeden Fall durchzuführen.

Der Erfindung liegt daher die Aufgabe zugrunde, ein Verfahren zu entwickeln, das es ermöglicht, die Funktion oder Notfunktion eines komplexen sicherheitskritischen, im Fahrzeug verteilten Systems beim Auftreten eines beliebigen Fehlers, einer beliebigen Anzahl von Fehlern oder Fehlerkombinationen aufrecht zu erhalten und dabei weniger Rechenzeit in Anspruch zu nehmen.

Es hat sich herausgestellt, dass diese Aufgabe durch das im Anspruch 1 beschriebene Verfahren gelöst wird.

Weitere bevorzugte Ausführungsformen ergeben sich aus den Unteransprüchen und der nachfolgenden Beschreibung eines Ausführungsbeispiels an Hand von Figuren.

Es zeigen
- Fig. 1: ein schematisches Blockschaltbild zur Erläuterung der Funktionsblöcke des erfindungsgemäßen Verfahrens,
- Fig. 2: eine schematische Darstellung von Komponenten und der Wirkungsweise bei Ereignissen, die für eine Komponente relevant sind und
- Fig. 3: eine schematische Darstellung der Komponenten unterschiedlicher Teilsysteme.

Nach dem Verfahren wird das Gesamtsystem (z.B. ein elektronisches Kraftfahrzeugbremssystem mit ABS, ESP und weiteren Teilfunktionen) nach den Erkenntnissen einer Fehlerquellenanalyse in Systemkomponenten unterteilt.

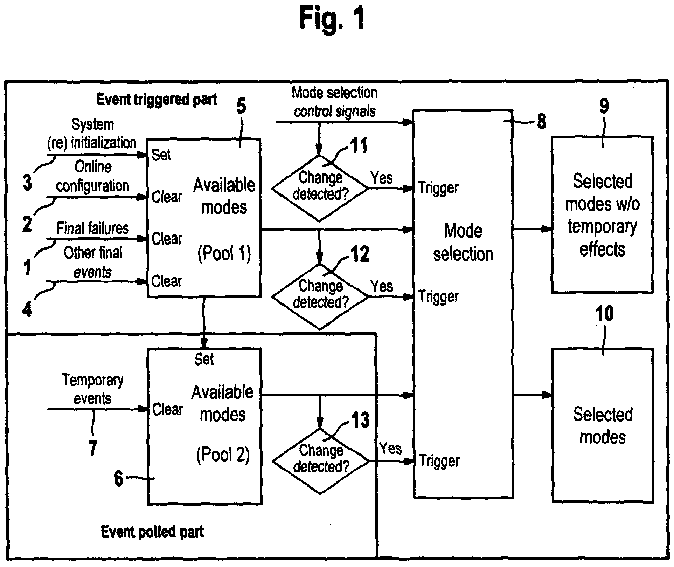

Für die einzelnen Systemkomponenten (z.B. Sensoren oder Regelfunktionen des Bremssystems) werden jeweils Betriebsmodi definiert, die beispielsweise in den Blöcken 5 und 6 in Fig. 1 gespeichert werden.

Beim Auftreten von Fehlern und/oder Ereignissen (Bezugszeichen 1 bis 4 und 7 in Fig. 1) im Gesamtsystem werden die Fehlerquellen analysiert und diejenigen Betriebsmodi ermittelt, die von den aufgetretenen Fehlern betroffen sind. Dies wird beispielsweise in den Blöcken 5 und 6 bewerkstelligt.

Danach werden in Block 8 (Modusauswahl) auf Basis der Fehlerquellenanalyse und nach den Vorgaben eines Auswahlsystems aus den von den Fehlern/Ereignissen nicht betroffenen, d.h. noch verfügbaren Betriebsmodi der einzelnen Systemkomponenten diejenigen ausgewählt, die in Anbetracht der aufgetretenen Fehler/ Ereignisse ein optimales oder ein vorgegebenes Verhalten des Gesamtsystems oder zumindest die Aufrechterhaltung der Funktion des Gesamtsystems gewährleisten.

Eine Besonderheit des erfindungsgemäßen Verfahrens besteht nun darin, dass bei der Definition der Fehler und/oder Ereignisse für die Systemkomponenten zumindest eine Einteilung in
a) nur zeitweise auftretende Fehler/Ereignisse, die eine zeitweise Abschaltung oder Einschränkung des Systems und/oder einer Teilfunktion bewirken, und
b) in Fehler/Ereignisse, die eine endgültige Abschaltung oder Einschränkung des Systems und/oder einer Teilfunktion bewirken, vorgenommen wird.

Dieses Vorgehen ist durch die Aufteilung der Modi in die Blöcke 5 und 6 in Fig. 1 deutlich gemacht.

In verteilten Systemen, bei denen mehrere Steuergeräte zur Bildung eines Gesamtsytems miteinander über Bussysteme kommunizieren (z.B. AUTO-SAR), sind die Systemkomponenten nicht mehr voneinander unabhängig. Dehalb ist es bevorzugt, um diese "externen" Systemkomponenten bei der Fehleranalyse mitberücksichtigen zu können, die Betriebszustände von externen Steuergeräten als Ereignissezu behandeln und bei der Fehleranalyse zu verarbeiten. Auf diese Weise kann für das Gesamtsystem auch bei verteilen Steuergeräten eine Aussage über die Verfügbarkeit getroffen werden.

Bevorzugt werden bei der Systemkomponentenauswahl in Block 8 zunächst nur finale Fehler/Ereignisse berücksichtigt (Datensatz in Block 5). Der so bereinigte Datensatz kann besonders bevorzugt bei einem erneuten Fehleranalyseschritt übernommen werden. Dies ist durch Block 6 symbolisiert. Durch Verwendung von bereinigten Datensätzen kann das Verfahren gegenüber dem gattungsgemäßen Verfahren einfacher eine Aussage über die finale Systemdegradation treffen.

Die Auswertung der Betriebsmodi bezüglich ihrer Auswirkung auf das System wird bevorzugt ein Mal zu Beginn des Verfahrens ausgeführt. Außerdem erfolgt die Auwertung immer dann, wenn ein Fehler oder ein Ereignis auftritt. Bei der gemäß dem Stand der Technik durchgeführten Fehleranalyse wurde die Auswertung in einer Schleife ständig wiederholt. Durch die vorstehend beschriebene ereignisgesteuerte Auswertung ergibt sich also ein erheblich geringerer Rechenzeitverbrauch.

Die Betriebsmodusauswahl bestimmt die zum Einsatz zu bringenden Betriebsmodi einer Systemkomponente. Es ist dabei zweckmäßig, dass immer erst dann, wenn eine Veränderung der Fehler- oder Signalzuordnung bei einer Komponente auftritt, die Betriebsmodiauswahl erneut durchgeführt wird.

Vorzugsweise werden neben Fehlern und Störungen uneingeschränkt und gleichberechtigt auch alle anderen Signalarten ausgewertet, die entweder einen Einfluss auf die Komponentenverfügbarkeiten oder auf das Betriebsmodi-Auswahlsystem haben. Dazu gehören z.B. Compilezeit- und Online-Konfiguration, besondere Systemzustände wie Systeminitialisierung und -shutdown, Eigendiagnose, Diagnose, Kalibriervorgänge u.a.. Somit istdas Betriebsmodi-Auswahlsystem erheblich flexibler auf die eintretenden Systemzustände anpassbar.

Im Beispiel in Fig. 1 werden im linken Teil in Block 5 ereignisgesteuert die verschiedenen Signalarten, wie finale Fehler 1, Konfigurationsereignisse, Initialisierung 3 und andere finale Ereignisse 4 ausgewertet. In Block 5 ist ein erster Datensatz mit einer Auswahl der zum Einsatz zu bringenden Betriebsmodi enthalten, wobei dieser durch Elimination der Betriebsmodi bereinigt ist, die durch lediglich ausschließlich temporäre Ereignisse nicht verfügbar werden.

Block 6 umfasst einen zweiten Datensatz mit einer Auswahl der zum Einsatz zu bringenden Betriebsmodi einschließlich der Betriebsmodi, die durch temporäre Ereignisse 7 nicht verfügbar werden.

In Block 8 erfolgt die Betriebsmodi-Auswahl. Diese kann auf Basis des zweiten Datensatzes (Block 6) einen bestimmten Modus auf Grund finaler und temporärer Ereignisse festlegen (Block 10) oder lediglich einen Modus, der sich aus dem ersten Datensatz ergeben, der die finalen Ereignisse behandelt (Block 9). Die Modusauswahl 8 wird von verschiedenen Blöcken 13 aktiviert, welche eine Veränderung der Betriebsmodusverfügbarkeit oder der Auswahlkriterien feststellen können.

Der grau unterlegte Teil des Blockschaltbilds wird in jeder Reglerschleife durchgeführt ("Event Polling"). Es handelt sich also nicht um einen ereignisgesteuerten Teil. Der übrige Teil des Blockschaltbilds, welcher nicht grau unterlegt ist, wird einmal zu Beginn und nur dann aktiviert, wenn ein Fehler oder Ereignis vorliegt ("Event Triggered").

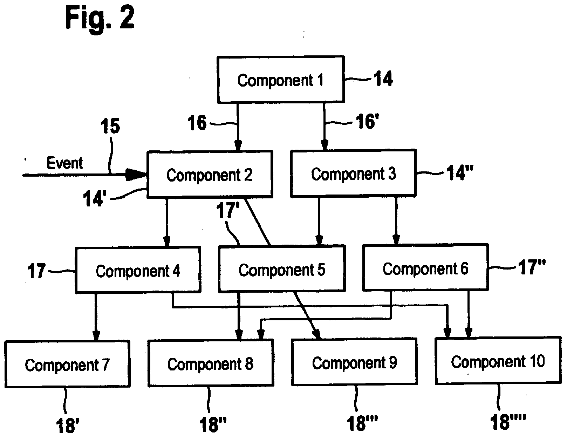

Fig. 2 erläutert die "fehlerabhängige" Rücknahme oder Einschränkung von Teilfunktionen, die auch als Degradation bezeichnet wird, bei den einzelnen Systemkomponenten 14 nach dem Auftreten eines Ereignisses 15. Ereignis 15 betrifft die Komponente 14'. Daraufhin wird gemäß der Komponentenabhängigkeiten (zum Beispiel funktioniert die Komponente ESP nur, wenn die Elektronik und der Gierratensensor in Ordnung ist) auf die Komponenten 17, 18', 18"' und 18"" heruntergebrochen bzw. propagiert. Bei Auftreten eines Fehlers (oder eines anderen relevanten Ereignisses) wird also zunächst ausschließlich die Verfügbarkeit der korrelierten Betriebsmodi der betroffenen Komponente 14' aberkannt und nicht, wie im Stand der Technik beschrieben, die Verfügbarkeit der Betriebsmodi aller, auch nur mittelbar betroffener Komponenten.

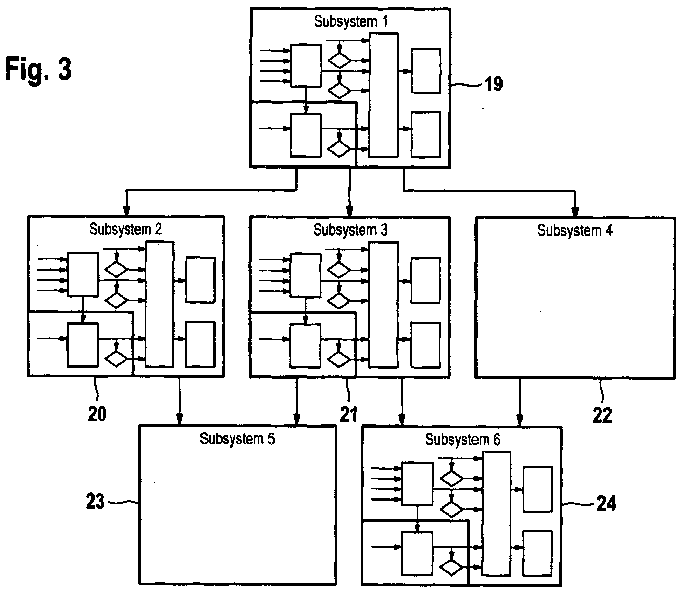

Mit den Grafiken in Fig. 3 wird die Komponentendegradation noch weiter veranschaulicht. Die Propagierung der Degradation zwischen den Komponenten unterschiedlicher Teilsysteme 19 bis 24 erfolgt in jedem Teilsystem entsprechend dem im Zusammenhang mit Fig. 1 erläuterten Verfahren. Die grau unterlegten Teilsysteme 22 und 23 symbolisieren Systeme, die nicht Bestandteil des Gesamtsystems sind (externe Teilsysteme). Komponentengruppen, bei denen die Degradationspropagierung ausgehend von den noch verfügbaren Komponenten-Betriebsmodi möglich ist (vorrangig lokale Komponenten mit einer Betriebsmodusauswahl dem Prinzip folgend, immer den besten Modus einer Komponente zu wählen), werden zu Teilsystemen zusammengefasst; die Degradationspropagierung zwischen den Komponenten unterschiedlicher Teilsysteme erfolgt dagegen ausgehend von den zum Einsatz gebrachten Betriebsmodi.

Das erfindungsgemäße Verfahren bietet den Vorteil einer hohen Rechenzeiteffizienz, da es größtenteils ereignisgesteuert arbeitet. Gleichzeitig werden die Aufgaben eines Systemverwaltungs- und Fehlerbeherrschungssystems bewältigt. Die Ermittlung der um temporäre Ereignisse bereinigten Systemdegradation verbraucht keine zusätzlichen Resourcen und ermöglicht eine vereinfachte Berechnung der adäquaten Warnstufe. Das vorgeschlagene Verfahren ermöglicht zudem eine einfache Handhabung von komplexen verteilten Systemen, deren einzelne Teilsysteme (Steuergeräte, Aktoren, Sensoren etc.) ggf. von Dritten erstellt wurden.

Die Erfindung betrifft schließlich auch die Verwendung des obigen Verfahrens in elektronischen Kraftfahrzeugbremssystemen, elektronischen Lenksystemen, Fahrerassistenzsystemen oder ganz allgemein in Fahrzeugsteuergeräten.

## Patentansprüche

1. Verfahren zum Sicherstellen oder Aufrechterhalten der Funktion eines komplexen sicherheitskritischen Gesamtfahrzeugregelungs- und/oder -steuerungssystems beim Auftreten von Fehlern, Fehlfunktionen oder sonstigen Ereignissen, die einen Einfluss auf die Verfügbarkeit von Teilfunktionen haben, bei dem das Gesamtsystem nach den Erkenntnissen einer Fehlerquellenanalyse in Systemkomponenten unterteilt wird, bei dem weiterhin für die einzelnen Systemkomponenten Betriebsmodi definiert werden, wobei weiterhin beim Auftreten von Fehlern/Ereignissen im Gesamtsystem die Fehlerquellen einschließlich der Signale analysiert und diejenigen Betriebsmodi ermittelt werden, die von den aufgetretenen Fehlern oder Signalen betroffen sind, und wobei schließlich auf Basis der Fehlerquellenanalyse und nach den Vorgaben eines Auswahlsystems aus den von den Fehlern/Ereignissen nicht betroffenen, d.h. noch verfügbaren Betriebsmodi der einzelnen Systemkomponenten diejenigen ausgewählt werden, die in Anbetracht der aufgetretenen Fehler/Ereignisse ein optimales oder ein vorgegebenes Verhalten des Gesamtsystems oder zumindest die Aufrechterhaltung der Funktion des Gesamtsystems gewährleisten, **dadurch gekennzeichnet, dass** bei der Definition der Fehler/Ereignisse für die Systemkomponenten zumindest eine Einteilung vorgenommen wird in:
- Nur zeitweise auftretende Fehler/Ereignisse, die eine zeitweise Abschaltung oder Einschränkung des Systems und/oder einer Teilfunktion bewirken und
- in Fehler/Ereignisse, die eine endgültige Abschaltung oder Einschränkung des Systems und/oder einer Teil funktion bewirken, wobei
in einem ersten Fehleranalyseschritt (5) finale Fehler/Ereignisse bei der Systemkomponentenauswahl berücksichtigt werden und in einem weiteren Fehleranalyseschritt (6) zeitweise auftretende Fehler/Ereignisse zusätzlich berücksichtigt werden.

2. Verfahren nach Anspruch 1, **dadurch gekennzeichnet, dass** die Auswertung der Betriebsmodi bezüglich ihrer Auswirkung auf das System ein Mal zu Beginn des Verfahrens ausgeführt wird und jedesmal, wenn ein Fehler oder ein Ereignis auftritt.

3. Verfahren nach mindestens einem der Ansprüche 1 oder 2, **dadurch gekennzeichnet, dass** neben den zeitweise auftretenden und finalen Fehlern uneingeschränkt und gleichberechtigt auch Ereignisse ausgewertet werden, die entweder einen Einfluss auf die Komponentenverfügbarkeiten oder auf das Betriebsmodi-Auswahlsystem haben.

4. Verfahren nach mindestens einem der Ansprüche 1 bis 3, **dadurch gekennzeichnet, dass** die Betriebszustände von externen Steuergeräten als Ereignisse behandelt werden, so dass diese bei der Fehleranalyse mitberücksichtigt werden können.

5. Computerprogrammprodukt, welches einen Algorithmus umfasst, welcher ein Verfahren gemäß mindestens einem der Ansprüche 1 bis 4 ausführt.

6. Verwendung des Verfahrens gemäß mindestens einem der Ansprüche 1 bis 4 in elektronischen Kraftfahrzeugbremssystemen, elektronischen Lenksystemen, Fahrerassistenzsystemen oder ganz allgemein in Fahrzeugsteuergeräten.

## Claims

1. Method for safeguarding or maintaining the operation of a complex safety-critical overall vehicle regulatory and/or control system in the event of the occurrence of errors, malfunctions or other events which influence the availability of subfunctions, in which the overall system is divided into system components on the basis of the findings of an error source analysis, in which modes of operation are also defined for the individual system components, and also, in the event of the occurrence of errors/events in the overall system, the error sources including the signals are analyzed and those methods of operation which are affected by the errors or signals which have occurred are ascertained, and wherein finally, on the basis of the error source analysis and according to the stipulations of a selection system, those modes of operation of the individual system components which are not affected by the errors/events, i.e. are still available, are taken and those which, in view of the errors/events which have occurred, ensure an optimum or prescribed response from the overall system or at least the maintenance of the operation of the overall system are selected, **characterized in that** the definition of the errors/events of system components involves at least classification into:
- only intermittently occurring errors/events which cause intermittent disconnection or restriction of the system and/or of a subfunction, and
- errors/events which cause ultimate disconnection or restriction of the system and/or of a subfunction, wherein a first error analysis step (5) involves final errors/events being taken into account in the system component selection, and a further error analysis step (6) involves intermittently occurring errors/events being additionally taken into account.

2. Method according to Claim 1, **characterized in that** the modes of operation are evaluated in terms of their effect on the system once at the start of the method and every time an error or an event occurs.

3. Method according to at least one of Claims 1 and 2, **characterized in that** besides the intermittently occurring and final errors, events which influence either the component availabilities or the modes-of-operation selection system are also evaluated without restriction and with equal authorization.

4. Method according to at least one of Claims 1 to 3, **characterized in that** the operating states of external controllers are treated as events, so that said events can also be taken into account in the error analysis.

5. Computer program product which comprises an algorithm which performs a method according to at least one of Claims 1 to 4.

6. Use of the method according to at least one of Claims 1 to 4 in electronic motor vehicle braking systems, electronic steering systems, driver assistance systems or quite generally in vehicle controllers.

## Revendications

1. Procédé pour garantir ou maintenir la fonction d'un système de régulation et/ou de commande de véhicule global complexe critique pour la sécurité en présence d'anomalies, de dysfonctionnements ou d'autres événements particuliers ayant une influence sur la disponibilité de fonctions partielles ; dans lequel le système global est divisé en composants du système après les déductions d'une analyse de source d'anomalie, dans lequel des modes de fonctionnement sont en outre définis pour les composants individuels du système, les sources d'anomalie, y compris celles des signaux, étant en outre analysées en présence d'anomalies/événements survenus dans le système global et les modes de fonctionnement concernés par les anomalies ou les signaux survenus étant déterminés ; et pour finir, sur la base de l'analyse de source d'anomalie et d'après les instructions préalables d'un système de sélection parmi les anomalies/événements non concernés, c'est-à-dire les modes de fonctionnement encore disponibles des composants individuels du système, on choisit ceux qui au regard des anomalies/événements survenus garantissent un comportement optimal ou prédéfini du système global ou tout du moins le maintien de la fonction du système global ; **caractérisé en ce que** : un classement au moins est effectué lors de la définition des anomalies/événements des composants du système :
- anomalies/événements survenant seulement de façon intermittente et provoquant une déconnexion ou une limitation partielle du système et/ou d'une fonction partielle ; et
- anomalies/événements provoquant une déconnexion ou une limitation définitive du système et/ou d'une fonction partielle,
lors d'une première étape d'analyse d'anomalie (5), les anomalies/événements définitifs étant pris en compte dans la sélection des composants du système et que lors d'une étape d'analyse d'anomalie (6) supplémentaire, les anomalies/événements intermittents étant en outre prises en compte.

2. Procédé selon la revendication 1, **caractérisé en ce que** l'analyse des modes de fonctionnement est réalisée par rapport à leur effet sur le système une fois au début du procédé et à chaque fois qu'une anomalie ou un événement se produit.

3. Procédé selon au moins l'une quelconque des revendications 1 ou 2, **caractérisé en ce qu'**outre les anomalies intermittentes et définitives, on analyse également la non-limitation et le maintien des événements ayant soit une influence sur la disponibilité des composants soir sur le système de sélection des modes de fonctionnement.

4. Procédé selon au moins l'une quelconque des revendications 1 à 3, **caractérisé en ce que** les états de fonctionnement des appareils de commande externes sont traités comme des événements, de sorte que ceux-ci peuvent également être pris en compte lors de l'analyse d'anomalie.

5. Produit de programme informatique comprenant un algorithme réalisé selon au moins l'une quelconque des revendications 1 à 4.

6. Utilisation du procédé selon au moins l'une quelconque des revendications 1 à 4 dans des systèmes électroniques de freinage de véhicule automobile, des systèmes électroniques de direction, des systèmes d'aide à la conduite ou de façon tout à fait générale dans des appareils de commande du véhicule.
